# EUROPÄISCHE PATENTSCHRIFT

(11) **EP 1 533 103 B1**
(45) Veröffentlichungstag und Bekanntmachung des Hinweises auf die Patenterteilung: **26.09.2012**
(21) Anmeldenummer: 04450198.9
(22) Anmeldetag: 29.10.2004
(51) Int. Cl.: B29C 49/56

(54) **Verfahren und Vorrichtung zum Blasformen von Hohlkörpern unter Verwendung eines Linearmotors zum Schliessen und Öffnen der Formwerkzeuge.**
Method and apparatus for blow moulding of hollow bodies with the use of a linear motor for closing and opening of the moulds
Procédé et dispositif pour mouler par soufflage des corps creux à l'aide d'un moteur linéaire pour la fermeture et l'ouverture des moules

(30) Priorität: 11.11.2003 AT 18152003
(43) Veröffentlichungstag der Anmeldung: 25.05.2005
(73) Patentinhaber: KOSME Gesellschaft mbH, 2601 Sollenau (AT)
(72) Erfinder: Hofstätter, Wilhelm, 2700 Wiener Neustadt (AT)
(74) Vertreter: Miksovsky, Alexander

(56) Entgegenhaltungen:
- DE-A1- 10 004 247
- DE-A1- 19 909 307
- DE-C1- 10 053 901
- DE-U- 20 015 590
- US-B1- 6 544 026

## Beschreibung

Die vorliegende Erfindung bezieht sich auf ein Verfahren zum Blasformen von Hohlkörpern, wobei ein erwärmter, rohrförmiger, thermoplastischer Vorformling in eine Blasform eingebracht wird, die Blasform geschlossen wird und der erwärmte Vorformling durch Einbringen eines Gases unter Druck auf die endgültige Form des Hohlkörpers aufgeweitet wird und anschließend abgekühlt wird, umfassend die folgenden Schritte:
Schließen der Blasform durch einen Elektromotor,
Ausschalten des Elektromotors,
Beaufschlagen der Blasform mit einer Vorrichtung zum Halten der Blasform in der geschlossenen Stellung,
Einbringen des Gases unter Druck in den Vorformling zur Ausbildung des Hohlkörpers,
Lösen des Druckes von der Halteeinrichtung,
Öffnen der Blasform durch den Elektromotor.

Die Erfindung bezieht sich darüber hinaus auf eine Vorrichtung zum Blasformen von Hohlkörpern aus rohrförmigen, thermoplastischen Vorformlingen, umfassend eine Blasform zur Aufnahme des Vorformlings, einen Antrieb zum öffnen und Schließen der Blasform, eine Vorrichtung zum Einbringen eines Gases unter Druck in den Vorformling zum Ausbilden der Hohlkörper und eine Vorrichtung zum Beaufschlagen der Blasform in die geschlossene Stellung.

Bei der Herstellung von Hohlkörpern, insbesondere PET-Behältern bzw. -Flaschen, aus rohrförmigen, thermoplastischen Vorformlingen werden relativ dickwandige Vorformlinge eingesetzt. Diese werden üblicherweise erwärmt und durch anschließende, mechanische Verformung bzw. Verstreckung in einer Blasform in einer sogenannten Blas- bzw. Streckblasvorrichtung auf das Maß des fertigen Behälters bzw. der fertigen Flasche verformt. Dabei wird das Material des Vorformlings beispielsweise unter Verwendung eines Reckdorns sowie unter gleichzeitiger Einbringung eines Gases unter Druck in den erwärmten Vorformling so gedehnt, daß die Umfang- bzw. Mantelfläche des herzustellenden Hohlkörpers eine relativ dünne Wandstärke erreicht und in einer kalten bzw. gekühlten Form bzw. Blasform einfriert, wodurch der Behälter bzw. Hohlkörper seine Form beibehält, ohne sie nachträglich nach dem Abkühlvorgang entscheidend zu verändern.

Zum Öffnen und Schließen einer Blasform werden üblicherweise mechanische Hebelantriebe oder Kurbelantrieb verwendet, mit welchen ein Formschlitten bzw. Formschlittenteile, welche Teile der zu öffnenden und zu schließenden Blasform tragen, zueinander und weg voneinander bewegt werden, wobei in der geschlossenen Stellung der Blasform während des Einbringens von Druck in den insbesondere erwärmten Vorformling zum Aufweiten des Vorformlings auf den herzustellenden Hohlkörper eine Halteeinrichtung bzw. Vorrichtung zum Halten der Blasform in der geschlossenen Stellung mit Druck beaufschlagt wird, um den beim Einbringen des Gases unter Druck in den Vorformling wirkenden Kräften zu widerstehen. Eine derartige Ausführungsform ist beispielsweise: der DE-A 100 04 247 zu entnehmen.

Nachteilig bei der bekannten Ausführungsform eines Antriebs zum Öffnen und Schließen einer Blasform unter Verwendung von Hebelantrieben bzw. Kurbelantrieben ist die Tatsache, daß bei einer Änderung der Blasform zur Herstellung von unterschiedlichen Behältern bzw. Hohlkörpern eine aufwendige Anpassung des Bewegungsablaufs beim Hin- und Herbewegen der Einzelteile der Blasform vorgesehen sein muß bzw. ein vollständiger Austausch des Antriebsmechanismus erforderlich ist. Darüber hinaus muß die Positionierung der Blasform sowie des Formschlittens, welcher die Blasform trägt, in der geschlossenen Stellung exakt auf die Positionierung der Blasform während der Beaufschlagung durch die Halteeinrichtung abgestimmt sein, um dem Druck während des Blasformen zu widerstehen. Es ist unmittelbar einsichtig, daß ein derartiger Hebel- bzw. Kurbelantrieb nicht nur mechanisch aufwendig ist, sondern insbesondere unter Berücksichtigung einer entsprechend hohen Durchsatzrate auch einem großen, mechanischen Verschleiß unterworfen ist. Weiters ist zu berücksichtigen, daß während der Beaufschlagung der Blasform in der geschlossenen Lage durch Druck bei nicht vollständig exakter Abstimmung des Kurbelantriebs mit der Haltevorrichtung für die Blasform eine mechanische Beanspruchung auf Elemente des Kurbelantriebs in der geschlossenen Stellung zusätzlich ausgeübt wird, so daß dieser wiederum einem erhöhten Verschleiß unterworfen ist.

Aus der DE-C 100 53 901 ist eine Schließeinheit bei einer Spritzgießmaschine zu entnehmen, wobei für ein rasches Anfahren und Zurückziehen einer Schließplatte einer Spritzgießmaschine und ein gleichzeitiges Bereitstellen einer langsamen Geschwindigkeit bei einem Anpressen und Freigeben ein Linearmotor Verwendung findet.

Darüber hinaus ist der DE-A 199 09 307 eine Produktionsmaschine mit elektrischen Antrieben für den Einsatz in der Kunststoffindustrie, wie beispielsweise einer Kunststoffspritzgießmaschine, Extrusionsmaschine oder Blasformmaschine zu entnehmen, wobei darauf abgezielt wird, eine derartige Produktsmaschine technisch und kostenmäßig zu verbessern.

Die vorliegende Erfindung zielt darauf ab, ein Verfahren sowie eine Vorrichtung der eingangs genannten Art zum Blasformen von Hohlkörpern dahingehend weiterzubilden, daß eine einfachere Adaptierung an gegebenenfalls unterschiedliche Blasformen beim Schließen der Blasform möglich wird. Weiters zielt die vorliegende Erfindung darauf ab, den Antrieb für die Blasform weitestgehend verschleißfrei auszubilden und eine ordnungsgemäße Führung der Blasform zu erzielen.

Zur Lösung dieser Aufgaben ist ein Verfahren der eingangs genannten Art mit den zusätzlichen Merkmalen, gemäβ dem kenn zeichnendem Teil des Anspruchs, weiter gebildet. Dadurch, daß erfindungsgemäß zum Öffnen und Schließen der Blasform ein Linearantrieb bzw. -motor verwendet wird, kann auf die aufwendige und mechanisch komplizierte Ausbildung des Antriebs gemäß dem Stand der Technik zur Bewegung der Blasform verzichtet werden. Durch die Verwendung eines Linearmotors zum Bewegen der Blasform wird der Einsatz eines verschleißfreien Antriebs ermöglicht. Darüber hinaus ist erfindungsgemäß vorgesehen, daß nach einem Schließen der Blasform der Linearmotor ausgeschaltet wird, so daß die Blasform in ihrer geschlossenen Lage durch die Vorrichtung zum Halten der Blasform gehalten werden kann, ohne Einflüsse auf den Antrieb zum Öffnen und Schließen der Blasform auszuüben. Es erfolgt somit eine vollständige Entkopplung der Blasform von einer mechanischen Beaufschlagung durch den Antrieb während des Haltens der Blasform in der geschlossenen Lage, worauf der Hohlkörper durch Einbringen von Gas unter Druck in den erwärmten Vorformling ausgebildet wird. Nach Fertigstellung des Hohlkörpers und einer gegebenenfalls erfolgten Abkühlung zur Beibehaltung der hergestellten Form desselben wird der Linearmotor wiederum in Betrieb genommen, um die Blasform zu Öffnen. Da der Linearmotor während des eigentlichen Ausbildens des Hohlkörpers, zu welcher Zeit die Blasform durch die Haltevorrichtung beaufschlagt wird und in der geschlossenen Lage gehalten wird, vollständig entkoppelt bzw. ausgeschaltet ist, kann ein Verschleiß auch zu diesem Zeitpunkt vermieden werden. Für eine ordnungsgemäße Führung der Blasform wird erfindungsgemäß darüber hinaus vorgeschlagen, daß die Blasform auf einem an dem Primärteil des Linearmotors festgelegten Formschlitten gehalten wird und daß der Sekundärteil des Linearmotors an einem feststehenden Rahmenteil vorgesehen wird. An einem derartigen Formschlitten können unterschiedliche Blasformen zur Herstellung von unterschiedlichen Hohlkörpern festgelegt werden, wobei, wie oben bereits erwähnt, für eine Anpassung an unterschiedliche Blasformen ein Linearmotor entsprechend angesteuert werden kann, so daß aufwendige Justierungs- bzw. Austauscharbeiten, wie sie bei mechanischen Antrieben gemäß dem Stand der Technik erforderlich sind, vermieden werden können.

Zur Lösung der eingangs genannten Aufgaben ist weiters eine Vorrichtung der obengenannten Art mit den zusätzlichen Merkmalen, gemäβ dem kennzeichnenden Teil des Anspruchs 2, weitergebildet. wie bereits oben erwähnt, kann durch Bereitstellung eines Linearmotors als Antrieb für ein öffnen und Schließen der Blasform eine im wesentlichen wartungsfreie Art eines Antriebs zur Verfügung gestellt werden, wobei auch in einfacher Weise durch ein Ausschalten des Linearmotors während des eigentlichen Blasvorgangs eine Beeinflussung bzw. Beeinträchtigung und insbesondere ein Verschleiß des Antriebs für die Blasform während des Haltens der Blasform in der geschlossenen Lage durch Verwendung einer zusätzlichen Halte- bzw. Druckvorrichtung vermieden werden kann. Wie oben bereits angedeutet, kann ein im wesentlichen einheitlicher Formschlitten für unterschiedliche Blasformen verwendet werden, so daß eine einfache und rasche Adaptierung der erfindungsgemäßen Vorrichtung an unterschiedliche, herzustellende Hohlkörper ermöglicht wird.

Das erfindungsgemäße Verfahren sowie die erfindungsgemäße Vorrichtung werden jeweils bevorzugt dahingehend eingesetzt, daß die Hohlkörper von PET-Behältern bzw. -Flaschen gebildet sind.

Für eine ordnungsgemäβe Führung der Bewegung der Blasformelemente bzw. -teile zum Öffnen und Schließen der Blasform wird darüber hinaus vorgeschlagen, daß Führungen für ein geradliniges Verschieben der Blasform vorgesehen sind, wie dies einer weiters bevorzugten Ausführungsform der erfindungsgemäßen Vorrichtung entspricht. Für eine Vereinfachung der Führung der Blasform wird in diesem Zusammenhang gemäß einer bevorzugten Ausführungsform vorgeschlagen, daß die Führungen mit dem Formschlitten zusammenwirken.

Für ein Öffnen und Schließen als auch eine Anpassung an unterschiedliche Blasformen zur Herstellung von unterschiedlichen Hohlkörpern wird gemäß einer bevorzugten Ausführungsform vorgeschlagen, daß der Linearmotor in unterschiedliche Positionen verschiebbar ist. Wie bereits mehrfach ausgeführt, ist eine derartige Anpassung bzw. Einstellung der Verschiebbarkeit des Linearmotors in unterschiedliche Positionen bzw. Stellungen stark vereinfacht gegenüber den bisher bekannten Ausführungsformen, bei welchen Hebel- bzw. Kurbelantriebe verwendet wurden, bei welchen entsprechend aufwendige Justierungs- bzw. Austauscharbeiten für eine Anpassung an unterschiedliche Blasformen erforderlich waren.

Zur Überwachung der Positionierung des Linearmotors und somit der Lage der einzelnen Elemente der Blasform wird gemäß einer bevorzugten Ausführungsform vorgeschlagen, daß im Bereich der Führungen Markierungen und/oder Sensoren zur Feststellung der Position des Primärteils des Linearmotors und/oder des Formschlittens vorgesehen sind. Derartige Markierungen können insbesondere für eine Überwachung dienen, wobei erfindungsgemäß Sensoren für eine Automatisierung der Steuerung des Bewegungsablaufs bzw. des Verfahrensablaufs zum Blasformen von Hohlkörpern vorgesehen sein können. In diesem Zusammenhang wird gemäß einer besonders bevorzugten Ausführungsform vorgeschlagen, daß die Sensoren mit einer Steuer- bzw. Regeleinrichtung gekoppelt sind, welche mit dem Linearmotor und der Vorrichtung zum Beaufschlagen der Blasform bzw. des die Blasform haltenden Formschlittens gekoppelt ist. Durch eine derartige, erfindungsgemäß vorgesehene Kopplung der Sensoren mit einer Steuer- bzw. Regeleinrichtung kann jeweils in Anpassung an die Lage bzw. Stellung des Linearmotors und somit der Blasform nach einem Ausschalten des Linearmotors unmittelbar eine Beaufschlagung der Haltevorrichtung zum Halten der Blasform in der geschlossenen Stellung sowie ein Einbringen von Gas unter Druck zum Aufweiten des Vorformlings zur Herstellung des Hohlkörpers vorgenommen werden.

Die Erfindung wird nachfolgend anhand von in der beiliegenden Zeichnung schematisch dargestellten Ausführungsbeispielen näher erläutert. In dieser zeigen:
Fig. 1 eine perspektivische, schematische Ansicht einer erfindungsgemäßen Vorrichtung zum Blasformen von Hohlkörpern zur Durchführung des erfindungsgemäßen Verfahrens;
Fig. 2 in verkleinertem Maßstab einen Schnitt durch die Vorrichtung gemäß Fig. 1 in ebenfalls perspektivischer Darstellung;
Fig. 3 einen Schnitt durch die erfindungsgemäße Vorrichtung gemäß Fig. 1, wobei zusätzlich Blasformteile zur Ausbildung eines Hohlkörpers angedeutet sind; und
Fig. 4 ein Diagramm betreffend die Beaufschlagung des Linearmotors sowie der Vorrichtung zum Halten der Blasform in der geschlossenen Stellung zur Durchführung des erfindungsgemäßen Verfahrens.

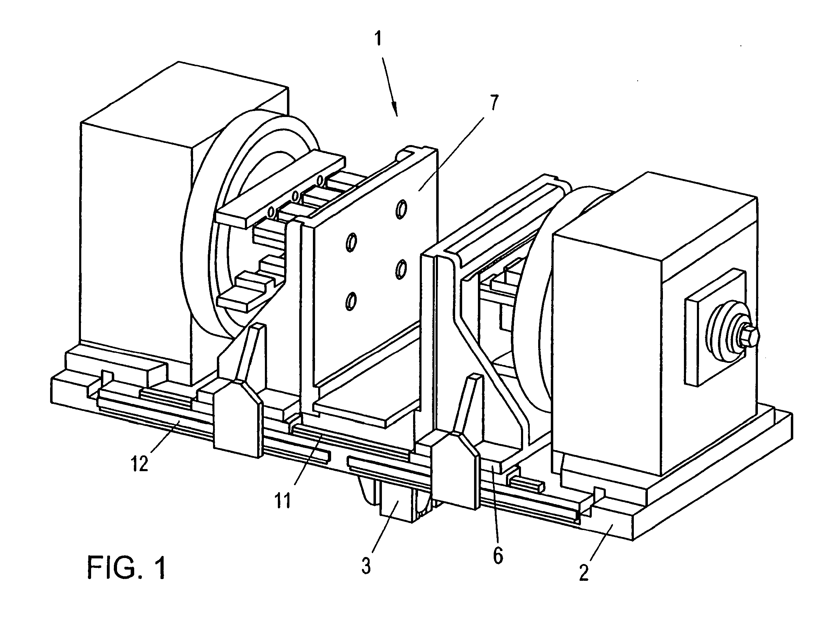

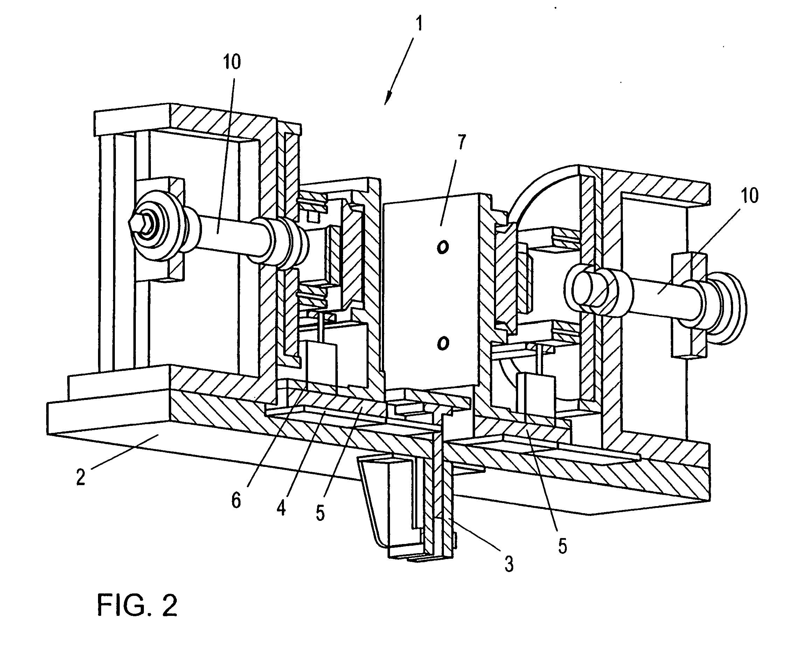

In Fig. 1 bis 3 ist eine Vorrichtung zum Blasformen von Hohlkörpern allgemein mit 1 bezeichnet, wobei auf einer Basis 2, welche über eine schematisch angedeutete Halterung 3 an einem nicht näher dargestellten Rahmen festlegbar ist, ein Sekundärteil eines Linearmotors als eine Dauermagnetleiste 4 vorgesehen ist. Der Sekundärteil 4 des Linearmotors wirkt mit einem Primärteil 5 zusammen, wobei an dem Primärteil 5 ein Formschlitten 6 festgelegt ist, welcher neben der horizontalen Basisplatte auch vertikale Stege bzw. Elemente 7 umfaßt.

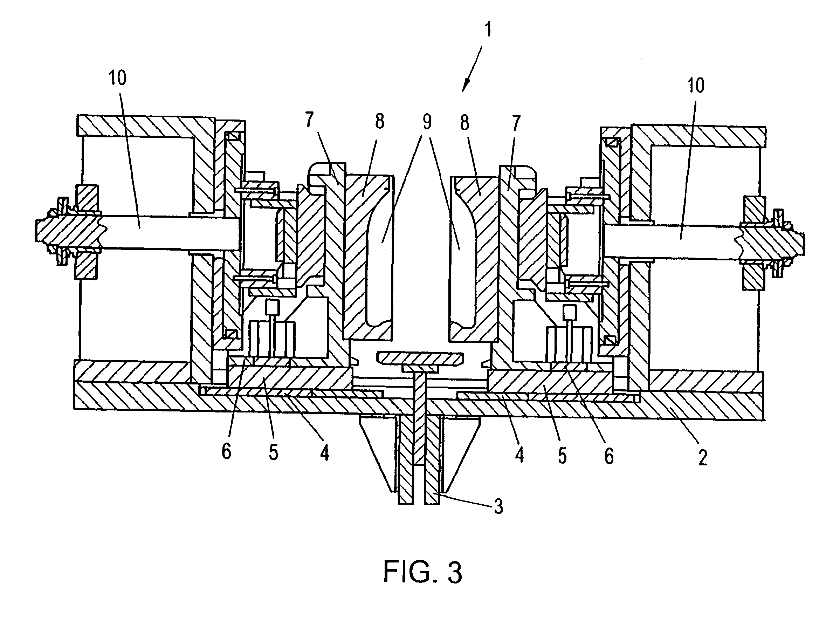

Wie dies aus Fig. 3 ersichtlich ist, sind an den vertikalen Elementen 7 des Formschlittens Blasformteile bzw. -elemente 8 festgelegt bzw. anordenbar, wobei in der Schnittdarstel-. lung gemäß Fig. 3 weiters die Form eines herzustellenden Hohlkörpers 9 angedeutet ist.

Über den vom Sekundärteil 4 und Primärteil 5 gebildeten Linearmotor erfolgt eine Bewegung der Elemente 8 der Blasform ausgehend von der in Fig. 3 dargestellten Lage in Richtung zueinander zum Schließen der Blasform, worauf der Linearmotor ausgeschaltet wird. In weiterer Folge wird der Formschlitten 6, 7 und somit die Blasform 8 durch schematisch mit 10 angedeutete Vorrichtungen zum Halten der Blasform in der geschlossenen Lage gehalten, wobei diese Vorrichtungen 10 beispielsweise durch Druckluft beaufschlagt werden. Nach einem Fertigstellen des auszubildenden bzw. herzustellenden Hohlkörpers 9 in der Blasform 8 und gegebenenfalls einem Abkühlen wird der Linearmotor bzw. das Primärteil 5 und Sekundärteil 4 wiederum mit Strom versorgt, worauf die Blasformteile 8 voneinander weg bewegt werden, so daß der hergestellte Hohlkörper aus der Blasform 8 entfernt werden kann.

Für eine Führung des Primärteils 5 relativ zu dem Sekundärteil 4 und somit des die Blasform 8 tragenden Formschlittens sind in Fig. 1 Führungen 11 angedeutet, entlang welchen die zueinander beweglichen Teile verschoben werden. Darüber hinaus sind im Bereich der Längsführungen 11 Markierungen 12 oder entsprechende Sensoren vorgesehen, um die Lage der zueinander verschiebbaren bzw. bewegbaren Elemente festzustellen und automatisch die Bewegung der einzelnen Elemente zueinander zu regeln bzw. zu steuern. Die Sensoren 12 können hiebei mit einer nicht näher dargestellten Steuer- bzw. Regeleinrichtung gekoppelt werden. Diese Steuer- bzw. Regeleinrichtung ist darüber hinaus mit dem von den Elementen 4 und 5 gebildeten Linearmotor als auch, mit der Haltevorrichtung 10 zum Halten der Blasform 8 in der geschlossenen Lage gekoppelt.

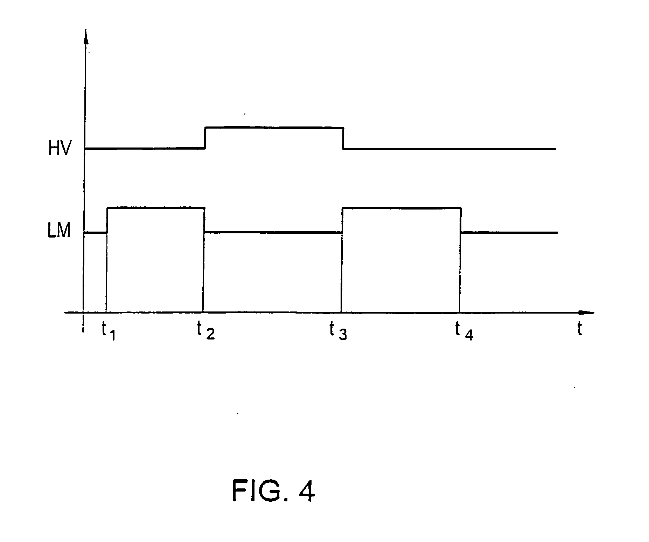

Diese Regelung bzw. Steuerung über die nicht näher dargestellte Regel- bzw. Steuereinrichtung ist in Fig. 4 schematisch angedeutet.

Aus Fig. 4 ist ersichtlich, daß der Linearmotor LM zu einem Zeitpunkt t₁ eingeschaltet wird, um die Blasformelemente 8 in Richtung zueinander zum Schließen der Blasform zu bewegen, wobei die Anspeisung des Linearmotors bis zum Zeitpunkt t₂ erfolgt. Zum Zeitpunkt t₂ wird der Linearmotor LM ausgeschaltet, worauf anschließend die Haltevorrichtung HV mit Druck beaufschlagt wird, um die Blasform 8 in ihrer geschlossenen Lage bis zum Zeitpunkt t₃ zu halten. Während dieser Zeit erfolgt ein Einbringen eines Gases unter Druck in den in der Blasform 8 aufgenommenen Vorformling zum Aufweiten des vorformlings in Anpassung an die Form 9 zur Herstellung des Hohlkörpers, beispielsweise eines PET-Behälters bzw. einer PET-Flasche. Nachdem zum Zeitpunkt t₃ der Blasvorgang beendet wurde, wird die Haltevorrichtung HV drucklos gemacht, worauf anschließend ebenfalls zum Zeitpunkt t₃ der Linearmotor LM wiederum eingeschaltet wird, um die Blasformelemente 8 für ein Öffnen der Blasform voneinander weg zu bewegen, um ein Ausbringen bzw. Auswerfen des hergestellten Hohlkörpers zu ermöglichen.

Daran anschließend wird für ein Formen eines neuen Hohlkörpers in der Blasform 8 der in Fig. 4 angedeutete Vorgang, beginnend beim Zeitpunkt t₁, wiederum wiederholt.

Es ist aus dem Diagramm gemäß Fig. 4 ersichtlich, daß während des Zeitraums eines Haltens der Blasform 8 in der ge-. schlossenen Lage der Linearmotor LM, welcher den Antrieb der Blasform bzw. Blasformelemente 8 bildet, ausgeschaltet ist, so daß keinerlei Beeinflussung bzw. mechanische Beanspruchung auf den Antrieb bzw. Linearmotor LM während des eigentlichen Blasvorgangs ausgeübt wird, da die Blasform in der geschlossenen Lage ausschließlich durch die Haltevorrichtung HV während deren Beaufschlagung innerhalb des Zeitraums t₂ bis t₃ gehalten wird.

## Patentansprüche

1. Verfahren zum Blasformen von Hohlkörpern, wobei ein erwärmter, rohrförmiger, thermoplastischer Vorformling in eine Blasform (8) eingebracht wird, die Blasform (8) geschlossen wird und der erwärmte Vorformling durch Einbringen eines Gases unter Druck auf die endgültige Form des Hohlkörpers (9) aufgeweitet wird und anschließend abgekühlt wird, umfassend die folgenden Schritte:
Schließen der Blasform (8) durch einen Elektromotor (4, 5), Ausschalten des Elektromotors (4, 5),
Beaufschlagen der Blasform (8) mit einer Vorrichtung (10) zum Halten der Blasform (8) in der geschlossenen Stellung,
Einbringen des Gases unter Druck in den Vorformling zur Ausbildung des Hohlkörpers (9),
Lösen des Druckes von der Halteeinrichtung (10),
öffnen der Blasform (8) durch den Elektromotor (4, 5),
**dadurch gekennzeichnet, dass** der Elektromotor ein Linearmotor ist, dass die Blasform (8) auf einem an einem Primärteil (5) des Linearmotors (4, 5) festgelegten Formschlitten (6, 7) gehalten wird und dass der Primärteil mit einem Sekundärteil (5) des Linearmotors (4, 5), der als eine Dauermagnetleiste (4) ausgebildet ist, zusammenwirkt.

2. Vorrichtung zum Blasformen von Hohlkörpern aus rohrförmigen, thermoplastischen Vorformlingen, umfassend eine Blasform (8) zur Aufnahme des Vorformlings, einen Antrieb zum öffnen und Schließen der Blasform (8), eine Vorrichtung zum Einbringen eines Gases unter Druck in den Vorformling zum Ausbilden der Hohlkörper (9) und eine Vorrichtung zum Beaufschlagen der Blasform (8) in die geschlossene Stellung, **dadurch gekennzeichnet, dass** der Antrieb für das Öffnen und Schließen der Blasform (8) von einem Linearmotor (4, 5) gebildet ist, dass ein Formschlitten (6, 7) zum Halten der Blasform (8) an einem Primärteil (5) des Linear-motors (4,5) festgelegt ist und dass ein Sekundärteil (5) des Linearmotors (4, 5) als eine Dauermagnetleiste ausgebildet ist und mit dem Primärteil (5) zusammenwirkt.

3. Vorrichtung nach Anspruch 2, **dadurch gekennzeichnet, dass** Führungen (11) für ein geradliniges Verschieben der Blasform (8) vorgesehen sind.

4. Vorrichtung nach Anspruch 3, **dadurch gekennzeichnet, dass** die Führungen (11) mit dem Formschlitten (6) zusammenwirken.

5. Vorrichtung nach einem der Ansprüche 2 bis 4, **dadurch gekennzeichnet, dass** der Linearmotor (4,5) in unterschiedliche Positionen verschiebbar ist.

6. Vorrichtung nach einem der Ansprüche 2 bis 5, **dadurch gekennzeichnet, dass** im Bereich der Führungen (11) Markierungen und/oder Sensoren (12) zur Feststellung der Position des Primärteils (5) des Linearmotors (4,5) und/oder des Formschlittens (6) vorgesehen sind.

7. Vorrichtung nach Anspruch 6, **dadurch gekennzeichnet, dass** die Sensoren (12) mit einer Steuer- bzw. Regeleinrichtung gekoppelt sind, welche mit dem Linearmotor (4,5) und der Vorrichtung (10) zum Beaufschlagen der Blasform (8) bzw. des die Blasform (8) haltenden Formschlittens (6, 7) gekoppelt ist.

8. Vorrichtung nach einem der Ansprüche 2 bis 7, **dadurch gekennzeichnet, dass** die Hohlkörper von PET-Behältern bzw. -Flaschen gebildet sind.

## Claims

1. A method for blow moulding hollow bodies, wherein a heated, tubular, thermoplastic preform is introduced into a blow mould (8), the blow mould (8) is closed, and the heated preform is expanded to the final shape of the hollow body (9) by injecting a gas under pressure and is subsequently cooled, said method comprising the steps of:
closing the blow mould (8) using an electric motor (4, 5),
shutting off the electric motor (4, 5),
urging the blow mould (8) by a device (10) for holding the blow mould (8) in the closed position,
injecting the gas under pressure into the preform for forming the hollow body (9),
releasing the pressure from the holding device (10),
opening the blow mould (8) using the electric motor (4, 5),
**characterized in that** the electric motor is a linear motor, that the blow mould (8) is held on a mould carriage (6, 7) fixed to a primary part (5) of the linear motor (4, 5), and that the primary part cooperates with a secondary part (5) of the linear motor (4, 5), which is designed as a permanent magnetic ledge (4).

2. A device for blow moulding hollow bodies from tubular, thermoplastic preforms, including a blow mould (8) for receiving the preform, an actuator for opening and closing the blow mould (8), a device for injecting a gas under pressure into the preform for forming the hollow body (9), and a device for urging the blow mould (8) into the closed position, **characterized in that** the actuator for opening and closing the blow mould (8) is comprised of a linear motor (4, 5), that a mould carriage (6, 7) for holding the blow mould (8) is fixed to a primary part (5) of the linear motor (4, 5), and that a secondary part (5) of the linear motor (4, 5) is designed as a permanent magnetic ledge (4) and cooperates with the primary part (5).

3. A device according to claim 2, **characterized in that** guides (11) are provided for linearly moving the blow mould (8).

4. A device according to claim 3, **characterized in that** the guides (11) cooperate with the mould carriage (6).

5. A device according to any one of claims 2 to 4, **characterized in that** the linear motor (4, 5) is movable into different positions.

6. A device according to any one of claims 2 to 5, **characterized in that** markers and/or sensors (12) are provided in the region of the guides (11) for determining the position of the primary part (5) of the linear motor (4, 5) and/or the mould carriage (6).

7. A device according to claim 6, **characterized in that** the sensors (12) are coupled to a control or regulation device that is coupled to the linear motor (4, 5) and the device (10) for urging the blow mould (8) and the mould carriage (6, 7) holding the blow mould (8), respectively.

8. A device according to any one of claims 2 to 7, **characterized in that** the hollow bodies are formed by PET containers or bottles.

## Revendications

1. Procédé servant à mouler par soufflage des corps creux, sachant qu'une préforme réchauffée, tubulaire, thermoplastique est introduite dans un moule de soufflage (8), que le moule de soufflage (8) est fermé et que la préforme réchauffée est élargie pour épouser la forme définitive du corps creux (9) en introduisant un gaz sous pression avant d'être refroidie, lequel procédé comprend les étapes suivantes consistant à :
fermer le moule de soufflage (8) par un moteur électrique (4, 5),
couper le moteur électrique (4, 5),
soumettre le moule de soufflage (8) à l'action d'un dispositif (10) servant à maintenir le moule de soufflage (8) dans la position fermée,
introduire le gaz sous pression dans la préforme pour former le corps creux (9),
libérer la pression du système de maintien (10),
ouvrir le moule de soufflage (8) grâce au moteur électrique (4, 5),
**caractérisé en ce que** le moteur électrique est un moteur linéaire, **en ce que** le moule de soufflage (8) est maintenu sur un chariot à moule (6, 7) fixé à une partie primaire (5) du moteur linéaire (4, 5), et **en ce que** la partie primaire coopère avec une partie secondaire (5) du moteur linéaire (4, 5), laquelle est réalisée comme une baguette à aimants permanents (4).

2. Dispositif servant à mouler par soufflage des corps creux à partir de préformes tubulaires thermoplastiques, comprenant un moule de soufflage (8) servant à recevoir la préforme, un dispositif d'entraînement servant à ouvrir et à fermer le moule de soufflage (8), un dispositif servant à introduire un gaz sous pression dans la préforme pour réaliser les corps creux (9) et un dispositif servant à solliciter le moule de soufflage (8) dans la position fermée, **caractérisé en ce que** le dispositif d'entraînement pour l'ouverture et la fermeture du moule de soufflage (8) est formé par un moteur linéaire (4, 5), **en ce qu'**un chariot à moule (6, 7) servant à maintenir le moule de soufflage (8) est fixé sur une partie primaire (5) du moteur linéaire (4, 5), et **en ce qu'**une partie secondaire (5) du moteur linéaire (4, 5) est réalisée comme une baguette à aimants permanents et coopère avec la partie primaire (5).

3. Dispositif selon la revendication 2, **caractérisé en ce que** des guidages (11) sont prévus pour un déplacement par coulissement en ligne droite du moule de soufflage (8).

4. Dispositif selon la revendication 3, **caractérisé en ce que** les guidages (11) coopèrent avec le chariot à moule (6).

5. Dispositif selon l'une quelconque des revendications 2 à 4, **caractérisé en ce que** le moteur linéaire (4, 5) peut être déplacé par coulissement dans diverses positions.

6. Dispositif selon l'une quelconque des revendications 2 à 5, **caractérisé en ce que** des balises et/ou des capteurs (12) servant à constater la position de la partie primaire (5) du moteur linéaire (4, 5) et/ou du chariot à moule (6) sont prévus dans la zone des guidages (11).

7. Dispositif selon la revendication 6, **caractérisé en ce que** les capteurs (12) sont couplés à un système de commande ou de réglage, lequel est couplé au moteur linéaire (4, 5) et au dispositif (10) servant à solliciter le moule de soufflage (8) ou le chariot à moule (6, 7) maintenant le moule de soufflage (8).

8. Dispositif selon l'une quelconque des revendications 2 à 7, **caractérisé en ce que** les corps creux sont formés par des récipients en PET ou des bouteilles en PET.
